(19) Europäisches Patentamt
European Patent Office
Office européen des brevets

(11) **EP 3 113 526 B1**

(12) **EUROPEAN PATENT SPECIFICATION**

(45) Date of publication and mention
of the grant of the patent:
**25.12.2019 Bulletin 2019/52**

(21) Application number: **14883621.6**

(22) Date of filing: **27.02.2014**

(51) Int Cl.:
*H04W 72/12* (2009.01)          *H04W 8/18* (2009.01)

(86) International application number:
**PCT/CN2014/072635**

(87) International publication number:
**WO 2015/127626 (03.09.2015 Gazette 2015/35)**

(54) **RESOURCE SCHEDULING METHOD AND DEVICE**

RESSOURCENPLANUNGSVERFAHREN UND VORRICHTUNG

PROCÉDÉ ET DISPOSITIF DE PLANIFICATION DE RESSOURCES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**04.01.2017 Bulletin 2017/01**

(73) Proprietor: **Huawei Technologies Co., Ltd.
Longgang District
Shenzhen, Guangdong 518129 (CN)**

(72) Inventors:
• **LIN, Yingpei
Shenzhen
Guangdong 518129 (CN)**
• **LOC, Peter
Shenzhen
Guangdong 518129 (CN)**
• **LUO, Yi
Shenzhen
Guangdong 518129 (CN)**

(74) Representative: **Isarpatent
Patent- und Rechtsanwälte Behnisch Barth
Charles
Hassa Peckmann & Partner mbB
Friedrichstrasse 31
80801 München (DE)**

(56) References cited:
EP-A1- 3 099 091          CN-A- 102 469 446
US-A1- 2012 155 406

• **NEC: "Solution for Frequent Small Data with
S1/S5/S8 Bearer Aggregation", 3GPP DRAFT;
S2-123887_SDDTE, 3RD GENERATION
PARTNERSHIP PROJECT (3GPP), MOBILE
COMPETENCE CENTRE ; 650, ROUTE DES
LUCIOLES ; F-06921 SOPHIA-ANTIPOLIS
CEDEX ; FRANCE , vol. SA WG2 2 October 2012
(2012-10-02), XP050683583, Retrieved from the
Internet:
URL:http://www.3gpp.org/ftp/tsg_sa/WG2_Arc
h/TSGS2_93_Sofia/Docs/ [retrieved on
2012-10-02]**

## Description

## TECHNICAL FIELD

Embodiments of the present invention relate to communications technologies, and in particular, to a resource scheduling method and a device.

## BACKGROUND

Thanks to rapid development of network technologies and mobile devices, a wireless local area network (Wireless Local Area Network, WLAN for short) technology based on IEEE 802.11 standards is greatly developed and is widely used.

A WLAN network uses a free unlicensed frequency band. Such a feature of an unlicensed spectrum and a contention based access mechanism of the WLAN lead to relatively low spectrum utilization and network efficiency. In addition, because of an attribute of uplink transmission data of traffic with small packets, in a scheduling system, the traffic with small packets needs high signaling scheduling overheads, which poses a great challenge to a capacity of a control channel.

US 2012 / 155406 A1 provides a method of transmitting data in a machine type communication (MTC) device belonging to an MTC group identified by a unique identity according to application features.

EP 3 099 091 A1 relates to an uplink resource allocation method including: sending a first request to an access point. The first request carries identifier information of the access terminal and includes information of the access terminal and indicating information indicating that the access terminal has a small packet service.

## SUMMARY

The present invention provides resource scheduling methods and devices so as to resolve a problem of scheduling overheads and collisions of uplink traffic with frequent small packets. The methods and devices are set forth in the independent claims 1, 5, 8 and 9. Additional embodiments of the invention are described in the dependent claims.

In the present invention, an AP device schedules uplink resources for multiple station devices that are associated with the AP device and that have uplink traffic with frequent small packets, thereby effectively reducing signaling scheduling overheads and lowering a load requirement on a downlink control channel.

## BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and persons of ordinary skill in the art may still derive other drawings from these accompanying drawings without creative efforts.

FIG. 1 is a schematic structural diagram of Embodiment 1 of a wireless access point device according to the present invention;
FIG. 2 is a schematic structural diagram of Embodiment 1 of a station device according to the present invention;
FIG. 3 is a schematic diagram of uplink transmission occurring when an AP device performs scheduling for multiple station devices according to the present invention;
FIG. 4 is a schematic structural diagram of Embodiment 2 of a wireless access point device according to the present invention;
FIG. 5 is a schematic structural diagram of Embodiment 2 of a station device according to the present invention;
FIG. 6 is a schematic structural diagram of Embodiment 3 of a wireless access point device according to the present invention;
FIG. 7 is a schematic structural diagram of Embodiment 3 of a station device according to the present invention;
FIG. 8 is a flowchart of Embodiment 1 of a resource scheduling method according to the present invention; and
FIG. 9 is a flowchart of Embodiment 2 of a resource scheduling method according to the present invention.

## DESCRIPTION OF EMBODIMENTS

The following clearly describes the technical solutions in the embodiments of the present invention with reference to the accompanying drawings in the embodiments of the present invention. Apparently, the described embodiments are merely some but not all of the embodiments of the present invention. All other embodiments obtained by persons of ordinary skill in the art based on the embodiments of the present invention without creative efforts shall fall within the protection scope of the present invention.

Uplink traffic with frequent small packets is, for example, a wireless office service in a virtual desktop infrastructure (Virtual Desktop Infrastructure, VDI for short) application, where uplink transmission data of the service is small packets less than 80 bytes (Byte), and these small packets are mainly mouse and keyboard control information and have a relatively high Quality of Service (Quality of Service, QoS for short) requirement. For the uplink traffic with frequent small packets with a high QoS requirement, the present invention provides a resource scheduling method and a device.

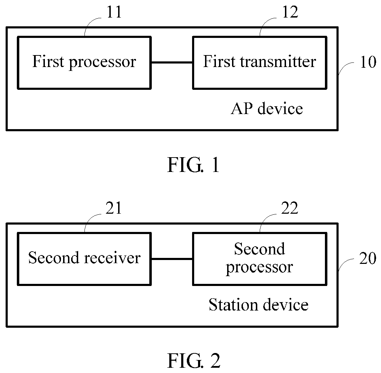

FIG. 1 is a schematic structural diagram of Embodiment 1 of a wireless access point device according to the present invention. This embodiment of the present invention provides a wireless access point (Access Point, AP for short) device. As shown in FIG. 1, an AP device 10 in this embodiment includes: a first processor 11 and a first transmitter 12 that are connected to each other.

The first processor 11 is configured to determine uplink resource scheduling information according to information about station devices associated with the AP device 10, where the uplink resource scheduling information includes an identifier (Identifier, ID for short) of each of to-be-scheduled station devices, to-be-scheduled uplink resources, and locations of the to-be-scheduled uplink resources, the to-be-scheduled station devices are one or more devices in the station devices, the identifier is used to indicate that the station device is a device having uplink traffic with frequent small packets, and the uplink traffic with frequent small packets is a predefined service or a service in which a quantity of uplink small packets received by the AP device per unit of time exceeds a preset threshold; and the first transmitter 12 is connected to the first processor 11 and is configured to send the uplink resource scheduling information determined by the first processor 11 to the to-be-scheduled station devices.

In this embodiment of the present invention, the AP device 10 is a device having a scheduling access function or a network access point. The AP device 10 determines, according to information about station devices that are associated with the AP device 10 and that have uplink traffic with frequent small packets, for example, information such as a quantity of the station devices, load information of the station devices, and QoS requirements of the station devices, IDs of to-be-scheduled station devices, to-be-scheduled uplink resources, and locations of the to-be-scheduled uplink resources, and periodically or dynamically schedules uplink resources for to-be-scheduled station devices associated with the AP device 10.

In view of problems of a latency requirement and signaling scheduling overheads of the uplink traffic with frequent small packets, the AP device 10 schedules uplink transmission resources for multiple station devices at a time according to IDs of the station devices, and delivers information about these resources to to-be-scheduled station devices. Each of the to-be-scheduled station devices finds, according to received scheduling signaling and a mapping relationship between an ID and an uplink resource, an uplink transmission resource allocated to the to-be-scheduled station device, to perform uplink transmission.

Specifically, the determining, by an AP device, uplink resource scheduling information according to information about station devices associated with the AP device may be implemented in multiple manners. Herein, an example is used merely for description: An AP device side has a feature of collecting statistics on a related service, for example, an average size of resources required by station devices when QoS requirements of 95% of the station devices are met. Requirement information about the average resource size may also be acquired by the AP device according to statistical information. Each time a new station device having the service joins, the AP device adds an uplink resource that corresponds to the station device and that is of a corresponding size to the to-be-scheduled uplink resources, so as to schedule the uplink resource for the station device, or correspondingly adjusts some resources in uplink resources of previously associated station devices as an uplink resource of the station device. The AP device determines a size and a location of an uplink resource according to a quantity of the station devices that are associated with the AP device and that have the service.

In this embodiment of the present invention, an AP device schedules uplink resources for multiple station devices that are associated with the AP device and that have uplink traffic with frequent small packets, thereby effectively reducing signaling scheduling overheads and lowering a load requirement on a downlink control channel. In addition, QoS requirements of the station devices are ensured by adjusting uplink resources allocated to the station devices.

In the foregoing embodiment, the first processor 11 may be specifically configured to: collect statistics on channel information and load information of the station devices associated with the AP device 10; determine, according to the channel information, a modulation and coding scheme (Modulation and Coding Scheme, MCS for short) supported by the AP device 10; acquire information about average load of the station devices according to the load information; and determine, according to the MCS and the information about the average load, a size of an uplink resource required by each station device; and the first transmitter 12 may be specifically configured to schedule uplink resources for the station devices according to a sum of uplink resources that are required by the station devices and that are determined by the first processor 11, where the uplink resources are some or all of the to-be-scheduled uplink resources.

FIG. 2 is a schematic structural diagram of Embodiment 1 of a station device according to the present invention. This embodiment of the present invention provides a station device. As shown in FIG. 2, a station device 20 in this embodiment includes a second receiver 21 and a second processor 22 that are connected to each other.

The second receiver 21 is configured to receive uplink resource scheduling information sent by an AP device, where the uplink resource scheduling information includes an ID of each of to-be-scheduled station devices, to-be-scheduled uplink resources, and locations of the to-be-scheduled uplink resources, the ID is used to indicate that the station device is a device having uplink traffic with frequent small packets, and the uplink traffic with frequent small packets is a predefined service or a service in which a quantity of uplink small packets received by the AP device per unit of time exceeds a preset threshold; and the second processor 22 is connected to the second receiver 21 and is configured to determine, according to a mapping relationship between an ID and an uplink resource, an uplink resource that corresponds to the station device 20 and that is used for uplink transmission, from the uplink resource scheduling information received by the second receiver 21.

Specifically, in this embodiment of the present invention, the station device 20 has uplink traffic with frequent small packets. The AP device is a device having a scheduling access function or a network access point. When the station device 20 is associated with the AP device, after receiving an association request packet sent by the station device 20, the AP device determines that the station device 20 has the uplink traffic with frequent small packets. Therefore, the AP device locally records that the station device 20 has the uplink traffic with frequent small packets and generates a unique ID for the station device 20. The ID is used to indicate scheduling information of the station device 20 when scheduling signaling is delivered. An uplink transmission resource of each to-be-scheduled station device is found according to a mapping relationship between an ID and an uplink resource by using an ID of each to-be-scheduled station device, from all to-be-scheduled uplink resources scheduled by the AP device for multiple station devices. The AP device adds the ID to an association response packet and delivers the association response packet to the station device 20.

It should be noted that, the uplink traffic with frequent small packets may be predefined. For example, a VDI service may be predefined as the uplink traffic with frequent small packets. Alternatively, the uplink traffic with frequent small packets may be a service in which a quantity of uplink small packets received by the AP device per unit of time exceeds a preset threshold.

In this embodiment of the present invention, an AP device schedules uplink resources for multiple station devices that are associated with the AP device and that have uplink traffic with frequent small packets, and to-be-scheduled uplink resources are mapped to to-be-scheduled station devices, thereby effectively reducing signaling scheduling overheads and lowering a load requirement on a downlink control channel. In addition, QoS requirements of the station devices are ensured by adjusting uplink resources allocated to the station devices.

Because of randomness of arrival, a feature of a small packet during transmission, and a QoS requirement of a low latency of the uplink service of the station devices, the AP device periodically allocates uplink transmission resources to the station devices. The AP device performs scheduling for multiple station devices at a time and notifies to-be-scheduled station devices involved in resource scheduling of to-be-scheduled resources and locations of the to-be-scheduled resources. Each of the station devices performs mapping according to a location and a size of a to-be-scheduled resource and an ID allocated by the AP device to the station device in advance that are in scheduling signaling, to determine an uplink transmission resource of the station device, and performs uplink transmission by using the uplink transmission resource. The AP device performs scheduling for multiple station devices at a time, thereby reducing signaling scheduling overheads.

The technical solutions of the embodiments shown in FIG. 1 and FIG. 2 are described below in detail by using several specific embodiments.

In a specific implementation manner, the first processor 11 may be specifically configured to determine a scheduling period, IDs of to-be-scheduled station devices, to-be-scheduled uplink resources, and locations of the to-be-scheduled uplink resources according to a quantity, load information, and QoS requirements of station devices associated with the AP device 10; and after a scheduling period starts, schedule an uplink resource for the to-be-scheduled station devices according to sizes and the locations of the to-be-scheduled uplink resources, where the uplink resource is some or all of the to-be-scheduled uplink resources.

In the implementation manner, the AP device 10 periodically schedules uplink resources of multiple station devices 20 having uplink traffic with frequent small packets. The AP device 10 determines, according to a quantity, load information, and QoS requirements of associated station devices in a basic service set (Basic Service Set, BSS for short) in which the AP device 10 is located, a scheduling period, IDs of to-be-scheduled station devices for each time of scheduling, and sizes and locations of uplink resources scheduled for the to-be-scheduled station devices each time.

Specifically, the AP device 10 collects statistics on and analyzes channel information, information about average load, and QoS information of the station devices associated with the AP device 10. The AP device 10 determines an available MCS by using the channel information, may learn information about average load of each station device by collecting statistics on load information, and may determine, by using the information about the average load and MCS information, a size of an uplink resource required by each station device. In addition, to meet a QoS requirement, the AP device collects statistics on information about uplink resources required within each scheduling period, and selects, according to the information about the uplink resources, a resource block whose size can meet, in the case of a particular probability, for example, 95%, QoS requirements of all the station devices associated with the AP device, and determines the size of the resource block as a size of a currently configured uplink small packet transmission resource block. A location of the resource block may be determined by the AP device 10 according to different scheduling algorithms, which is not limited herein.

It should be additionally noted that, at an initial stage in which station devices access the AP device, because the AP device does not have statistical information about the station devices associated with the AP device, a default value of information required by the uplink traffic with frequent small packets in a station device may be set. After collecting statistics on the foregoing information, the AP device schedules an uplink resource required by the station device.

When the AP device determines, for a station device, a to-be-scheduled resource and a location of the to-be-scheduled resource in the resource block, the scheduling period is a period of each uplink timeslot. That is, a location corresponding to the uplink timeslot is a scheduling location for transmission of an uplink small packet.

In another specific implementation manner, the first processor 11 may be specifically configured to: if it is determined that a quantity, load information, and QoS requirements of station devices 20 associated with the AP device 10 change, adjust a scheduling period, IDs of to-be-scheduled station devices, to-be-scheduled uplink resources, and locations of the to-be-scheduled uplink resources.

Specifically, the specific implementation manner differs from the previous implementation manner in: In the previous implementation manner, each time of resource scheduling is periodically triggered, that is, after a set period starts, the AP device 10 adjusts the uplink resources of the station devices 20 associated with the AP device 10. In this implementation manner, the AP device 10 schedules, in an event triggered manner, resources for the station devices 20 associated with the AP device 10, that is, when the quantity, the load information, and the QoS requirements of the station devices 20 change, for example, a quantity of station devices in a BSS in which the AP device is located increases or decreases, the AP device 10 needs to adjust uplink resources of the station devices 20. In this case, the AP device 10 dynamically adjusts, according to changed information, IDs of to-be-scheduled station devices and sizes of to-be-scheduled resources. The foregoing two implementation manners are specific implementation of resource scheduling under different trigger conditions.

In still another implementation manner, the first processor 11 may be specifically configured to determine, according to a quantity, load information, and QoS requirements of station devices 20 associated with the AP device 10, IDs of to-be-scheduled station devices, to-be-scheduled uplink resources and locations of the to-be-scheduled uplink resources, and resources of a preset size, and allocate, in each uplink timeslot, the resources of the preset size to the to-be-scheduled station devices.

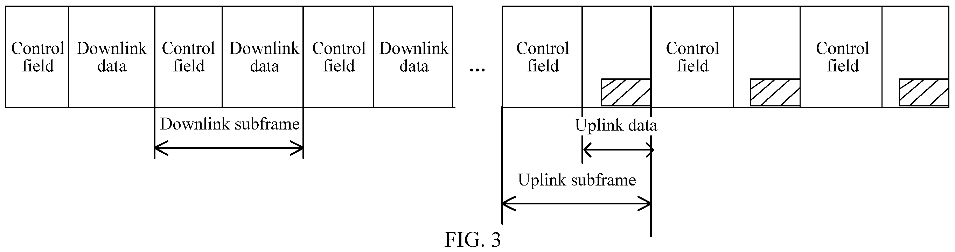

In the implementation manner, the AP device 10 regularly schedules resources of a preset size, so as to enable multiple station devices 20 having the uplink traffic with frequent small packets to perform uplink transmission. The AP device 10 allocates, in each uplink timeslot according to a quantity, load information, and QoS requirements of associated station devices 20 in the BSS, resources of a preset size to all the station devices 20 in the BSS to perform uplink transmission. The resources of the preset size are dynamically adjusted by the AP device 10 according to the quantity of the associated station device 20 in the BSS, load statistics on the uplink traffic with frequent small packets, and a QoS requirement of the uplink traffic with frequent small packets. Locations of the resources are relatively fixed, for example, resource blocks of a fixed quantity at the beginning of an uplink subframe or resource blocks of a fixed quantity at the end of an uplink subframe, as shown in FIG. 3.

After each time of periodically adjusting the resources of the preset size, the AP device 10 sends the uplink resource scheduling information to the station devices 20 in the BSS by using a broadcast beacon (Beacon) or control signaling in a downlink control channel. In addition, the resources of the preset size can only ensure simultaneous uplink transmission of station devices 20 of a fixed quantity. The fixed quantity is mainly determined by the AP device 10 according to load information and the QoS requirements. Each of the station device 20 finds a corresponding uplink resource according to an ID allocated by the AP device 10 to the station device 20 during association and a mapping relationship (for example, Hash mapping) between an ID and an uplink resource. Because the uplink resources are less than or equal to a sum of uplink transmission resources simultaneously allocated to all the station devices 20 in the BSS (that is, the to-be-scheduled uplink resources), the mapping relationship between an ID and an uplink resource may not be one-to-one. There are the following two cases: If there are a few station devices 20 in the BSS, an ID and an uplink resource is in a one-to-one mapping relationship. If there are many station devices 20 in the BSS, multiple STAs having the uplink traffic with frequent small packets may be mapped to a same resource. For example, if the Hash mapping is used, multiple IDs may be mapped to a same resource location.

Because the AP device 10 allocates resources according to statistics on load information of station devices 20, and needs to ensure that station devices mapped to a same uplink resource collide with each other as little as possible, when each station device 20 transmits uplink data, a corresponding uplink resource is first found according to the mapping relationship between an ID and an uplink resource, and the uplink data is then sent according to a transmission probability, thereby reducing collision.

Therefore, based on the description above, the first processor 11 may be further configured to determine, according to the load information and the QoS requirements of the station devices 20 associated with the AP device 10, a transmission probability for each of the to-be-scheduled station devices to send uplink data. In addition, the second receiver 21 may be further configured to: before the second processor 22 determines, according to the uplink resource scheduling information, the uplink resource that corresponds to the station device 20 and that is used for uplink transmission, receive a transmission probability sent by the AP device 10, where the transmission probability is determined by the AP device 10 according to the load information and the QoS requirements of the station devices 20 associated with the AP device 10.

Optionally, the first processor 11 may be specifically configured to: acquire a quantity $M$ of the station devices and a QoS requirement of the uplink traffic with frequent small packets of each of the station devices, where the QoS requirement includes a collision probability threshold; and calculate, according to the following formula, the transmission probability for each of the to-be-scheduled station devices to send the uplink data:

$$(\alpha \times p)^m \leq \beta \quad (1)$$

where $\alpha$ represents a small packet arrival rate of the station device, $\alpha = f_1 / f_2$, $f_1$ represents a frequency at which the station device generates a small packet, and $f_2$ represents a frequency at which the station device transmits a small packet; $p$ represents the transmission probability; $m \leq M$, and $m$ represents a quantity of station devices sharing a same resource element; and $\beta$ represents the collision probability threshold.

Specifically, the AP device may preset a parameter of the uplink traffic with frequent small packets, or may acquire the parameter of the service through statistics collection, where the parameter mainly refers to a distribution parameter of arrival intervals of small packets of the service. For example, distribution is modeled into negative exponential distribution, and a distribution parameter $\lambda$ of the distribution represents an average arrival interval of the small packets.

In addition, the to-be-scheduled uplink resources scheduled by the AP device for the to-be-scheduled station devices are divided into resource elements of an integer quantity. When a quantity of the station devices is greater than a quantity of the resource elements, multiple station devices may share one or more resource elements by means of mapping. In this case, collision may occur. Therefore, to reduce a probability of collision between station devices, each of the station devices sends a data packet according to a transmission probability. The transmission probability is obtained through calculation according to a small packet arrival rate and a collision probability. It should be further noted that, the small packet arrival rate and the collision probability may be obtained by means of statistics collection, or may be preset. For example, assuming that a station device needs to send one small packet to the AP device averagely every 20 milliseconds, and averagely every 10 milliseconds, there is one uplink timeslot or one resource element allocated to the station device, a probability of transmission of a small packet of a station device in each resource element can be obtained through calculation, that is, a small packet arrival rate is 0.5(10/20=0.5). Assuming that the to-be-scheduled uplink resources are divided into eight resource elements, and there are 16 station devices in total, (16/8=2) station devices share one resource element. In this case, a data collision probability of two station devices in one resource element is 0.25. Further, assuming that a system requires that a collision probability threshold cannot be higher than 4%, in this case, $(0.5 \times p)^2 \leq 0.04$ may be calculated, and $p \leq 0.4$ is obtained.

Based on the foregoing embodiment, the first transmitter 12 may be specifically configured to send the uplink resource scheduling information to the to-be-scheduled station devices by using a broadcast beacon or control signaling in a control channel. Correspondingly, the second receiver 21 may be specifically configured to receive the uplink resource scheduling information that is sent by the AP device 10 by using the broadcast beacon or the control signaling in the control channel.

Transmitting uplink resource scheduling information by using a broadcast beacon differs from transmitting uplink resource scheduling information by using control signaling in a control channel in: The control channel transmits the control signaling, for example, transmits scheduling information. In a WLAN system, an AP device periodically broadcasts a beacon, where the beacon includes management information, so that a station device that is to access the AP device may be associated with the AP device, and a station device previously associated with the beacon acquires required information from the beacon. Therefore, the AP device 10 may notify the station devices 20 by using the control channel to specially deliver scheduling information in time, or putting the scheduling information into a periodic beacon.

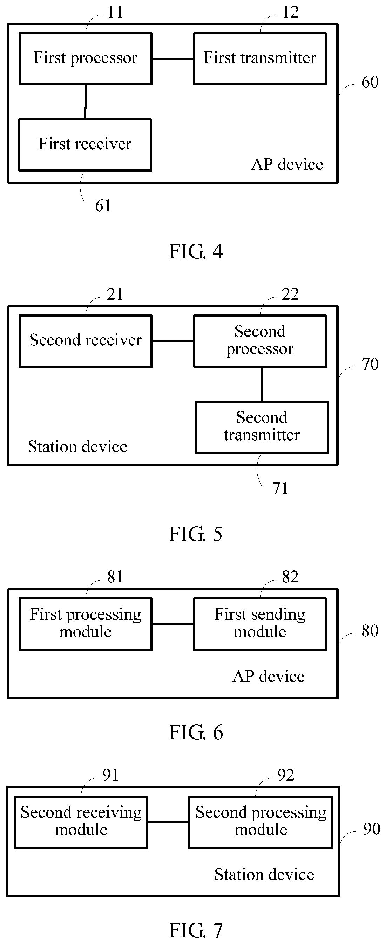

FIG. 4 is a schematic structural diagram of Embodiment 2 of a wireless access point device according to the present invention. As shown in FIG. 4, in this embodiment, based on the embodiment shown in FIG. 1, an AP device 60 may further include a first receiver 61, connected to the first processor 11, and configured to: before the first processor 11 determines, according to the information about the station devices associated with the AP device 60, the uplink resource scheduling information corresponding to the station devices, receive an association request packet sent by each of the station devices, where the association request packet carries statement information of an uplink frequent small packet device, and the statement information of an uplink frequent small packet device is used to indicate that the station device is a device having an uplink traffic with frequent small packets. In this case, the first processor 11 may be further configured to record the station device as an uplink frequent small packet device, and allocate an ID to the station device; and the first transmitter 12 may be further configured to send an association response packet to the station device, where the association response packet carries the ID.

When the station device 20 is associated with the AP device 60, the station device 20 states that the station device 20 has the uplink traffic with frequent small packets. After receiving an association request from the station device 20, the AP device 60 determines that the station device 20 has the uplink traffic with frequent small packets. Therefore, the AP device locally records that the station device 20 has the uplink traffic with frequent small packets and generates an ID for the station device 20. The ID is used by the AP device 60 to perform resource scheduling and mapping for the station device 20. The AP device 60 adds the ID to an association response and delivers the association response to the station device 20.

FIG. 5 is a schematic structural diagram of Embodiment 2 of a station device according to the present invention. As shown in FIG. 5, in this embodiment, based on the embodiment shown in FIG. 2, a station device 70 may further include a second transmitter 71. The second transmitter 71 is connected to the second processor 22 and is configured to: before the second receiver 21 receives the uplink resource scheduling information sent by the AP device, send an association request packet to the AP device, where the association request packet carries statement information of an uplink frequent small packet device, and the statement information of an uplink frequent small packet device is used to indicate that the station device 70 is a device having an uplink traffic with frequent small packets; and the second receiver 21 may be further configured to receive an association response packet sent by the AP device, where the association response packet carries the foregoing ID.

It should be further noted that, the load information and the QoS requirement of the station device mentioned above may be sent by the second transmitter 71 to the AP device, where the load information may also be locally obtained by the AP device by means of statistics collection.

FIG. 6 is a schematic structural diagram of Embodiment 3 of a wireless access point device according to the present invention. As shown in FIG. 6, an AP device 80 in this embodiment includes a first processing module 81 and a first sending module 82.

The first processing module 81 is configured to determine uplink resource scheduling information according to information about station devices associated with the AP device, where the uplink resource scheduling information includes an identifier of each of to-be-scheduled station devices, to-be-scheduled uplink resources, and locations of the to-be-scheduled uplink resources, the to-be-scheduled station devices are one or more devices in the station devices, the identifier is used to indicate that the station device is a device having uplink traffic with frequent small packets, and the uplink traffic with frequent small packets is a predefined service or a service in which a quantity of uplink small packets received by the AP device per unit of time exceeds a preset threshold; and the first sending module 82 is configured to send the uplink resource scheduling information determined by the first processing module 81 to the to-be-scheduled station devices.

An implementation principle and a technical effect of each module of the AP device in this embodiment are similar to those of the technical solution of the embodiment shown in FIG. 1. Details are not described herein again.

Based on the description above, in an implementation manner, the first processing module 81 may be specifically configured to: collect statistics on channel information and load information of the station devices associated with the AP device; determine, according to the channel information, an MCS supported by the AP device; acquire information about average load of the station devices according to the load information; and determine, according to the MCS and the information about the average load, a size of an uplink resource required by each station device; and the first sending module 82 may be specifically configured to schedule uplink resources for the station devices according to a sum of uplink resources required by the station devices, where the uplink resources are some or all of the to-be-scheduled uplink resources.

In another implementation manner, the first processing module 81 may be specifically configured to: if it is determined that a quantity, the load information, and QoS requirements of the station devices associated with the AP device change, adjust a scheduling period, identifiers of to-be-scheduled station devices, to-be-scheduled uplink resources, and locations of the to-be-scheduled uplink resources.

In still another implementation manner, the first processing module 81 may be specifically configured to determine, according to a quantity, the load information, and QoS requirements of the station devices associated with the AP device, identifiers of to-be-scheduled station devices, to-be-scheduled uplink resources and locations of the to-be-scheduled uplink resources, and resources of a preset size, and allocate, in each uplink timeslot, the resources of the preset size to the to-be-scheduled station devices.

Further, the first processing module 81 may be further configured to determine, according to load information and QoS requirements of the station devices associated with the AP device, a transmission probability for each of the to-be-scheduled station devices to send uplink data. Optionally, the first processing module 81 may be specifically configured to: acquire a quantity $M$ of the station devices and a QoS requirement of the uplink traffic with frequent small packets of each of the station devices, where the QoS requirement includes a collision probability threshold; and calculate, according to the following formula, the transmission probability for each of the to-be-scheduled station devices to send the uplink data:

$$(\alpha \times p)^m \leq \beta$$

where $\alpha$ represents a small packet arrival rate of the station device, $\alpha = f_1 \big/ f_2$, $f_1$ represents a frequency at which the station device generates a small packet, and $f_2$ represents a frequency at which the station device transmits a small packet; $p$ represents the transmission probability; $m \leq M$, and $m$ represents a quantity of station devices sharing a same resource element; and $\beta$ represents the collision probability threshold.

Based on the description above, the first sending module 82 may be specifically configured to send the uplink resource scheduling information to the to-be-scheduled station devices by using a broadcast beacon or control signaling in a control channel.

Optionally, based on the embodiment shown in FIG. 6, the AP device may further include: a first receiving module. The first receiving module is configured to: before the first processing module 81 determines, according to the information about the station devices associated with the AP device, the uplink resource scheduling information corresponding to the station devices, receive an association request packet sent by each of the station devices, where the association request packet carries statement information of an uplink frequent small packet device, and the statement information of an uplink frequent small packet device is used to indicate that the station device is a device having an uplink traffic with frequent small packets. In this case, the first processing module 81 may be further configured to record the station device as an uplink frequent small packet device, and allocate the identifier to the station device; and the first sending module 82 may be further configured to send an association response packet to the station device, where the association response packet carries the identifier.

FIG. 7 is a schematic structural diagram of Embodiment 3 of a station device according to the present invention. As shown in FIG. 7, a station device 90 in this embodiment includes a second receiving module 91 and a second processing module 92.

The second receiving module 91 is configured to receive uplink resource scheduling information sent by an AP device, where the uplink resource scheduling information includes an identifier of each of to-be-scheduled station devices, to-be-scheduled uplink resources, and locations of the to-be-scheduled uplink resources, the identifier is used to indicate that the station device is a device having uplink traffic with frequent small packets, and the uplink traffic with frequent small packets is a predefined service or a service in which a quantity of uplink small packets received by the AP device per unit of time exceeds a preset threshold; and the second processing module 92 is configured to determine, according to a mapping relationship between an identifier and an uplink resource, an uplink resource that corresponds to the station device 90 and that is used for uplink transmission, from the uplink resource scheduling information received by the second receiving module 91.

An implementation principle and a technical effect of each module of the station device in this embodiment are similar to those of the technical solution of the embodiment shown in FIG. 2. Details are not described herein again.

Based on the description above, the second receiving module 91 may be specifically configured to: receive the uplink resource scheduling information that is sent by the AP device by using a broadcast beacon or control signaling in a control channel. Optionally, the second receiving module 91 may be further configured to: before the second processing module 92 determines, according to the uplink resource scheduling information, the uplink resource that corresponds to the station device 90 and that is used for uplink transmission, receive a transmission probability sent by the AP device, where the transmission probability is determined by the AP device 90 according to load information and QoS requirements of station devices associated with the AP device.

Optionally, based on the embodiment shown in FIG. 7, the station device may further include: a second sending module, configured to: before the second receiving module 91 receives the uplink resource scheduling information sent by the AP device, send an association request packet to the AP device, where the association request packet carries statement information of an uplink frequent small packet device, and the statement information of an uplink frequent small packet device is used to indicate that the station device 90 is a device having an uplink traffic with frequent small packets; and the second receiving module 91 may be further configured to receive an association response packet sent by the AP device, where the association response packet carries the identifier.

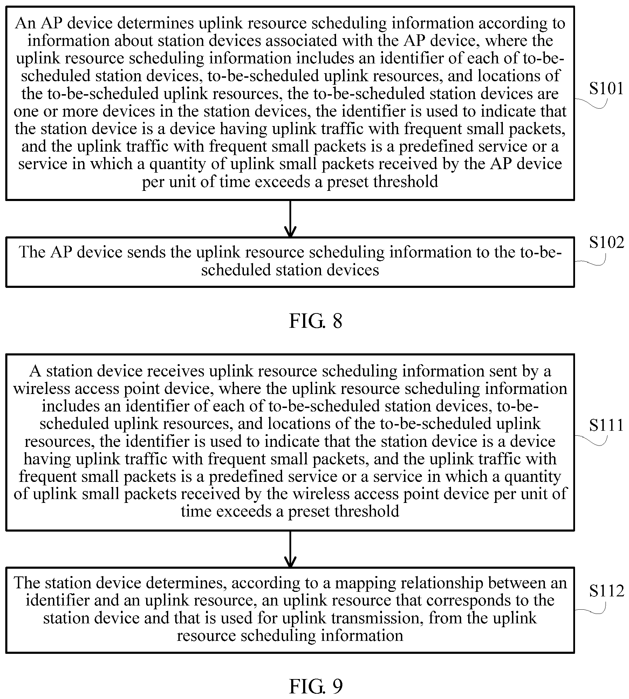

FIG. 8 is a flowchart of Embodiment 1 of a resource scheduling method according to the present invention. As shown in FIG. 8, the method in this embodiment of the present invention includes:

S101: An AP device determines uplink resource scheduling information according to information about station devices associated with the AP device, where the uplink resource scheduling information includes an identifier of each of to-be-scheduled station devices, to-be-scheduled uplink resources, and locations of the to-be-scheduled uplink resources, the to-be-scheduled station devices are one or more devices in the station devices, the identifier is used to indicate that the station device is a device having uplink traffic with frequent small packets, and the uplink traffic with frequent small packets is a predefined service or a service in which a quantity of uplink small packets received by the AP device per unit of time exceeds a preset threshold.

S102: The AP device sends the uplink resource scheduling information to the to-be-scheduled station devices.

The method in this embodiment may be performed by the AP device in the embodiment shown in FIG. 1 or FIG. 6, the implementation principles and technical effects thereof are similar, and details are not described herein again.

Based on the description above, in an implementation manner, S101 may specifically include: collecting, by the AP device, statistics on channel information and load information of the station devices associated with the AP device; determining, by the AP device according to the channel information, an MCS supported by the AP device; acquiring, by the AP device, information about average load of the station devices according to the load information; and determining, by the AP device according to the MCS and the information about the average load, a size of an uplink resource required by each station device; and S102 may specifically include: scheduling, by the AP device, uplink resources for the station devices according to a sum of uplink resources required by the station devices, where the uplink resources are some or all of the to-be-scheduled uplink resources.

In another implementation manner, S101 may specifically include: if it is determined that a quantity, the load information, and QoS requirements of the station devices associated with the AP device change, adjusting, by the AP device, a scheduling period, identifiers of to-be-scheduled station devices, to-be-scheduled uplink resources, and locations of the to-be-scheduled uplink resources.

In still another implementation manner, S101 may specifically include: determining, according to a quantity, the load information, and QoS requirements of the station devices associated with the AP device, identifiers of to-be-scheduled station devices, to-be-scheduled uplink resources and locations of the to-be-scheduled uplink resources, and resources of a preset size, and allocating, in each uplink timeslot, the resources of the preset size to the to-be-scheduled station devices. Optionally, the determining, by an AP device, uplink resource scheduling information according to information about station devices associated with the AP device may further include: determining, by the AP device according to load information and QoS requirements of the station devices associated with the AP device, a transmission probability for each of the to-be-scheduled station devices to send uplink data.

Optionally, the determining, by the AP device according to load information and QoS requirements of the station devices associated with the AP device, a transmission probability for each of the to-be-scheduled station devices to send uplink data may include: acquiring, by the AP device, a quantity M of the station devices and a QoS requirement of the uplink traffic with frequent small packets of each of the station devices, where the QoS requirement includes a collision probability threshold; and calculating, according to the following formula, the transmission probability for each of the to-be-scheduled station devices to send the uplink data:

$$\left(\alpha \times p\right)^{m} \leq \beta$$

where $\alpha$ represents a small packet arrival rate of the station device, $\alpha = f_1 \big/ f_2$, $f_1$ represents a frequency at which the station device generates a small packet, and $f_2$ represents a frequency at which the station device transmits a small packet; $p$ represents the transmission probability; $m \leq M$, and $m$ represents a quantity of station devices sharing a same resource element; and $\beta$ represents the collision probability threshold.

Further, S102 may specifically include: sending, by the AP device, the uplink resource scheduling information to the to-be-scheduled station devices by using a broadcast beacon or control signaling in a control channel.

Optionally, before S101, the method in this embodiment of the present invention may further include: receiving, by the AP device, an association request packet sent by each of the station devices, where the association request packet carries statement information of an uplink frequent small packet device, and the statement information of an uplink frequent small packet device is used to indicate that the station device is a device having an uplink traffic with frequent small packets; recording, by the AP device, the station device as an uplink frequent small packet device, and allocating the identifier to the station device; and sending, by the AP device, an association response packet to the station device, where the association response packet carries the identifier.

FIG. 9 is a flowchart of Embodiment 2 of a resource scheduling method according to the present invention. As shown in FIG. 9, the method in this embodiment of the present invention includes:

S111: A station device receives uplink resource scheduling information sent by a wireless access point device, where the uplink resource scheduling information includes an identifier of each of to-be-scheduled station devices, to-be-scheduled uplink resources, and locations of the to-be-scheduled uplink resources, the identifier is used to indicate that the station device is a device having uplink traffic with frequent small packets, and the uplink traffic with frequent small packets is a predefined service or a service in which a quantity of uplink small packets received by the wireless access point device per unit of time exceeds a preset threshold.

S112: The station device determines, according to a mapping relationship between an identifier and an uplink resource, an uplink resource that corresponds to the station device and that is used for uplink transmission, from the uplink resource scheduling information.

The method in this embodiment may be performed by the station device in the embodiment shown in FIG. 2 or FIG. 7, the implementation principles and technical effects thereof are similar, and details are not described herein again.

Based on the description above, Sill may include: receiving, by the station device, the uplink resource scheduling information that is sent by the wireless access point device by using a broadcast beacon or control signaling in a control channel.

Optionally, before S112, the method may further include: receiving, by the station device, a transmission probability sent by the wireless access point device, where the transmission probability is determined by the wireless access point device according to load information and QoS requirements of station devices associated with the wireless access point device.

Further, before Sill, the method may further include: sending, by the station device, an association request packet to the wireless access point device, where the association request packet carries statement information of an uplink frequent small packet device, and the statement information of an uplink frequent small packet device is used to indicate that the station device is a device having an uplink traffic with frequent small packets; and receiving, by the station device, an association response packet sent by the wireless access point device, where the association response packet carries the identifier.

In this embodiment of the present invention, an AP device schedules uplink resources for multiple station devices that are associated with the AP device and that have uplink traffic with frequent small packets, thereby effectively reducing signaling scheduling overheads and lowering a load requirement on a downlink control channel. In addition, QoS requirements of the station devices are ensured by adjusting uplink resources allocated to the station devices.

Persons of ordinary skill in the art may understand that all or some of the steps of the method embodiments may be implemented by a program instructing relevant hardware. The program may be stored in a computer-readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

**Claims**

1. A wireless access point device (10), wherein the wireless access point device (10) comprises:

   a) a first processing module (11), configured to determine uplink resource scheduling information according to information about station devices associated with the wireless access point device, wherein the uplink resource scheduling information comprises an identifier of each of to-be-scheduled station devices, to-be-scheduled uplink resources, and locations of the to-be-scheduled uplink resources, the to-be-scheduled station devices are multiple devices of the station devices, the identifier is used to indicate that the station device is a device having uplink traffic with frequent small packets, and the uplink traffic with frequent small packets is a predefined service or a service in which a quantity of uplink small packets received by the wireless access point device per unit of time exceeds a preset threshold; and
   b) a first sending module (12), configured to send the uplink resource scheduling information determined by the first processing module to the to-be-scheduled station devices;
   c) the wireless access point device (10) is adapted to schedule the uplink transmission resources for multiple station devices at a time according to identifiers of the station devices, and to deliver information about the resources to to-be-scheduled station devices, **characterized by**
   d) wherein uplink transmission data in the service is small packets less than 80 bytes; and
   e1) wherein the first processing module (11) is specifically configured to:
   collect statistics on channel information and load information of the station devices associated with the wireless access point device (11);
   e2) determine, according to the channel information, a modulation and coding scheme, MCS, supported by the wireless access point device (10);

e3) acquire information about average load of the station devices according to the load information; and

e4) determine, according to the MCS and the information about the average load, a size of an uplink resource required by each of the station devices; wherein

e5) the first sending module is specifically configured to schedule uplink resources for the station devices according to a sum of uplink resources required by the station devices, wherein the uplink resources are some or all of the to-be-scheduled uplink resources; and

f) wherein the first processing module (11) is further configured to:

determine, according to load information and QoS requirements of the station devices associated with the wireless access point device (10), a transmission probability for each of the to-be-scheduled station devices to send uplink data.

2. The wireless access point device (10) according to claim 1, wherein the first processing module (11) is specifically configured to:

acquire a quantity M of the station devices and a QoS requirement of the uplink traffic with frequent small packets of each of the station devices, wherein the QoS requirement comprises a collision probability threshold; and

calculate, according to the following formula, the transmission probability for each of the to-be-scheduled station devices to send the uplink data:

$$(\alpha \times p)^m \leq \beta$$

wherein $\alpha$ represents a small packet arrival rate of the station device, $\alpha = f_1 / f_2$, $f_1$ represents a frequency at which the station device generates a small packet, and $f_2$ represents a frequency at which the station device transmits a small packet; p represents the transmission probability; $m \leq M$, and $m$ represents a quantity of station devices sharing a same resource element; and $\beta$ represents the collision probability threshold.

3. The wireless access point device (10) according to any one of claims 1 to 2, wherein the first sending module (12) is specifically configured to:

send the uplink resource scheduling information to the to-be-scheduled station devices by using a broadcast beacon or control signaling in a control channel.

4. The wireless access point device (60) according to any one of claims 1 to 3, wherein the wireless access point device (60) further comprises:

a first receiving module (61), configured to: before the first processing module (11) determines, according to the information about the station devices associated with the wireless access point device (60), the uplink resource scheduling information corresponding to the station devices, receive an association request packet sent by each of the station devices, wherein the association request packet carries statement information of an uplink frequent small packet device, and the statement information of an uplink frequent small packet device is used to indicate that the station device is a device having an uplink traffic with frequent small packets; and

the first processing module (11) is further configured to record the station device as an uplink frequent small packet device, and allocate the identifier to the station device; and

the first sending module (12) is further configured to send an association response packet to the station device, wherein the association response packet carries the identifier.

5. A station device (20), wherein the station device (20) comprises:

a) a second receiving module (21), configured to receive uplink resource scheduling information sent by a wireless access point device, wherein the uplink resource scheduling information comprises an identifier of each of to-be-scheduled station devices, to-be-scheduled uplink resources, and locations of the to-be-scheduled uplink resources, the identifier is used to indicate that the station device (20) is a device having uplink traffic with frequent small packets, and the uplink traffic with frequent small packets is a predefined service or a service in which a quantity of uplink small packets received by the wireless access point device per unit of time exceeds a preset threshold; and

b) a second processing module, configured to determine, according to a mapping relationship between an identifier and an uplink resource, an uplink resource that corresponds to the station device (20) and that is used for uplink transmission, from the uplink resource scheduling information received by the second receiving module (21),

c) the station device (20) is adapted find, according to received scheduling signaling and a mapping relationship between an identifier and an uplink resource, an uplink transmission resource allocated to the to-be-scheduled station device, to perform uplink transmission, **characterized by**
d) wherein uplink transmission data in the service is small packets less than 80 bytes.
e) wherein the second receiving module (21) is further configured to:
before the second processing module determines, according to the uplink resource scheduling information, the uplink resource that corresponds to the station device (20) and that is used for uplink transmission, receive a transmission probability sent by the wireless access point device, wherein the transmission probability is determined by the wireless access point device according to load information and QoS requirements of station devices associated with the wireless access point device.

6. The station device (20) according to claim 5, wherein the second receiving module (21) is specifically configured to:
receive the uplink resource scheduling information that is sent by the wireless access point device by using a broadcast beacon or control signaling in a control channel.

7. The station device (70) according to any one of claims 5 to 6, wherein the station device (70) further comprises:

> a second sending module (71), configured to: before the second receiving module (71) receives the uplink resource scheduling information sent by the wireless access point device, send an association request packet to the wireless access point device, wherein the association request packet carries statement information of an uplink frequent small packet device, and the statement information of an uplink frequent small packet device is used to indicate that the station device (70) is a device having an uplink traffic with frequent small packets; and the second receiving module (21) is further configured to receive an association response packet sent by the wireless access point device, wherein the association response packet carries the identifier.

8. A resource scheduling method, wherein the resource scheduling method comprises:

> a) determining (S101), by a wireless access point device, uplink resource scheduling information according to information about station devices associated with the wireless access point device, wherein the uplink resource scheduling information comprises an identifier of each of to-be-scheduled station devices, to-be-scheduled uplink resources, and locations of the to-be-scheduled uplink resources, the to-be-scheduled station devices are multiple devices of the station devices, the identifier is used to indicate that the station device is a device having uplink traffic with frequent small packets, and the uplink traffic with frequent small packets is a predefined service or a service in which a quantity of uplink small packets received by the wireless access point device per unit of time exceeds a preset threshold; and
b) sending (S102), by the wireless access point device, the uplink resource scheduling information to the to-be-scheduled station devices
c) scheduling the uplink transmission resources for multiple station devices at a time according to identifiers of the station devices, and
d) delivering information about the resources to to-be-scheduled station devices,
**characterized by**
e) wherein uplink transmission data in the service is small packets less than 80 bytes; and
e1) wherein the determining (S101), by a wireless access point device, uplink resource scheduling information according to information about station devices associated with the wireless access point device comprises:

> e2) collecting, by the wireless access point device, statistics on channel information and load information of the station devices associated with the wireless access point device;
> e3) determining, by the wireless access point device according to the channel information, a modulation and coding scheme MCS supported by the wireless access point device;
> e4) acquiring, by the wireless access point device, information about average load of the station devices according to the load information; and
> e4) determining, by the wireless access point device according to the MCS and the information about the average load, a size of an uplink resource required by each of the station devices; and
> e5) the sending, by the wireless access point device, the uplink resource scheduling information to the to-be-scheduled station devices comprises:
> e6) scheduling, by the wireless access point device, uplink resources for the station devices according to a sum of uplink resources required by the station devices, wherein the uplink resources are some or all of the to-be-scheduled uplink resources; and

f) before the sending (S102), by the wireless access point device, the uplink resource scheduling information to the to-be-scheduled station devices, further comprising:
determining, by the wireless access point device according to load information and QoS requirements of the station devices associated with the wireless access point device, a transmission probability for each of the to-be-scheduled station devices to send uplink data.

9. A resource scheduling method, wherein the resource scheduling method comprises:

a) receiving (Sill), by a station device, uplink resource scheduling information sent by a wireless access point device, wherein the uplink resource scheduling information comprises an identifier of each of to-be-scheduled station devices, to-be-scheduled uplink resources, and locations of the to-be-scheduled uplink resources, the identifier is used to indicate that the station device is a device having uplink traffic with frequent small packets, and the uplink traffic with frequent small packets is a predefined service or a service in which a quantity of uplink small packets received by the wireless access point device per unit of time exceeds a preset threshold; and
b) determining, by the station device according to a mapping relationship between an identifier and an uplink resource, an uplink resource that corresponds to the station device and that is used for uplink transmission, from the uplink resource scheduling information
c) finding an uplink transmission resource allocated to the to-be-scheduled station device, according to received scheduling signaling and a mapping relationship between an identifier and an uplink resource, to perform uplink transmission,
**characterized by**
d) wherein uplink transmission data in the service is small packets less than 80 bytes; and
e1) wherein before the determining (S112), by the station device according to a mapping relationship between an identifier and an uplink resource, an uplink resource that corresponds to the station device and that is used for uplink transmission, the method further comprises:
e2) receiving, by the station device, a transmission probability sent by the wireless access point device, wherein the transmission probability is determined by the wireless access point device according to load information and QoS requirements of station devices associated with the wireless access point device.

**Patentansprüche**

1. Drahtlose Zugangspunktvorrichtung (10), wobei die drahtlose
Zugangspunktvorrichtung (10) Folgendes umfasst:

a) ein erstes Verarbeitungsmodul (11), das für das Bestimmen von Uplink-Ressourcenplanungs-Informationen gemäß Informationen über Stationsgeräte, die mit der drahtlosen Zugangspunktvorrichtung assoziiert sind, konfiguriert ist, wobei die Uplink-Ressourcenplanungs-Informationen einen Identifikator für jedes zu planende Stationsgerät, für jede zu planende Uplink-Ressource und Orte der zu planenden Uplink-Ressourcen umfassen, wobei die zu planenden Stationsgeräte mehrere Geräte der Stationsgeräte sind, der Identifikator zum Anzeigen verwendet wird, dass das Stationsgerät ein Gerät mit Uplink-Verkehr mit häufigen kleinen Paketen ist, und der Uplink-Verkehr mit häufigen kleinen Paketen ein vordefinierter Dienst oder ein Dienst ist, bei dem eine Menge von kleinen Uplink-Paketen, die von der drahtlosen Zugangspunktvorrichtung pro Zeiteinheit empfangen werden, eine vorher festgelegte Schwelle überschreitet; und
b) ein erstes Sendemodul (12), das für das Senden der Uplink-Ressourcenplanungs-Informationen, die vom ersten Verarbeitungsmodul bestimmt wurden, an die zu planenden Stationsgeräte konfiguriert ist;
c) die drahtlose Zugangspunktvorrichtung (10), die zum Planen der Uplink-Übertragungsressourcen für mehrere Stationsgeräte zu einem Zeitpunkt gemäß Identifikatoren der Stationsgeräte und zum Liefern von Informationen über die Ressourcen an die zu planenden Stationsgeräte angepasst ist, **dadurch gekennzeichnet, dass**
d) Uplink-Übertragungsdaten im Dienst kleine Pakete mit weniger als 80 Byte sind; und
e1) das erste Verarbeitungsmodul (11) speziell für Folgendes konfiguriert ist:
Sammeln von Statistiken über Kanalinformationen und Lastinformationen der Stationsgeräte, die mit der drahtlosen Zugangspunktvorrichtung (11) assoziiert sind;
e2) Bestimmen eines MCS (Modulation and Coding Scheme = Modulations- und Codierungsschema) gemäß den Kanalinformationen, das von der drahtlosen Zugangspunktvorrichtung (10) unterstützt wird;
e3) Erwerben von Informationen über die durchschnittliche Last der Stationsgeräte gemäß den Lastinformationen; und

e4) Bestimmen einer Größe einer Uplink-Ressource, die für jedes Stationsgerät erforderlich ist, gemäß dem MCS und den Informationen über die durchschnittliche Last; wobei

e5) das erste Sendemodul speziell für das Planen von Uplink-Ressourcen für die Stationsgeräte gemäß einer Summe von Uplink-Ressourcen konfiguriert ist, die für die Stationsgeräte erforderlich ist, wobei die Uplink-Ressourcen einige oder alle der zu planenden Uplink-Ressourcen umfassen; und

f) wobei das erste Verarbeitungsmodul (11) ferner für Folgendes konfiguriert ist:

Bestimmen einer Übertragungswahrscheinlichkeit für jedes zu planende Stationsgerät zum Senden von Uplink-Daten gemäß Lastinformationen und QoS-Bestimmungen der Stationsgeräte, die mit der drahtlosen Zugangspunktvorrichtung (10) assoziiert sind.

2. Drahtlose Zugangspunktvorrichtung (10) nach Anspruch 1, wobei das erste Verarbeitungsmodul (11) speziell für Folgendes konfiguriert ist:

Erwerben einer Menge M von Stationsgeräten und einer QoS-Bestimmung des Uplink-Verkehrs mit häufigen kleinen Paketen für jedes Stationsgerät, wobei die QoS-Bestimmung eine Schwelle der Kollisionswahrscheinlichkeit umfasst; und

Berechnen der Übertragungswahrscheinlichkeit für jedes zu planende Stationsgerät zum Senden von Uplink-Daten gemäß der folgenden Formel:

$$(\alpha \times p)^m \le \beta$$

wobei $\alpha$ eine kleine Paketankunftsrate des Stationsgeräts darstellt, $\alpha = f_1 / f_2$, $f_1$ eine Frequenz darstellt, bei der das Stationsgerät ein kleines Paket erzeugt, und $f_2$ eine Frequenz darstellt, bei der das Stationsgerät ein kleines Paket überträgt; $p$ die Übertragungswahrscheinlichkeit darstellt; $m \le M$, und $m$ eine Menge von Stationsgeräten darstellt, die sich ein gleiches Ressourcenelement teilt; und $\beta$ die Schwelle der Kollisionswahrscheinlichkeit darstellt.

3. Drahtlose Zugangspunktvorrichtung (10) nach einem der Ansprüche 1 bis 2, wobei das erste Sendemodul (12) speziell für Folgendes konfiguriert ist:

Senden von Uplink-Ressourcenplanungs-Informationen an die zu planenden Stationsgeräte mithilfe eines Übertragungssignals (broadcast beacon) oder von Kontrollsignalen in einem Kontrollkanal.

4. Drahtlose Zugangspunktvorrichtung (60) nach einem der Ansprüche 1 bis 3, wobei die drahtlose Zugangspunktvorrichtung (60) ferner Folgendes umfasst:

ein erstes Empfangsmodul (61), folgendermaßen konfiguriert: bevor das erste Verarbeitungsmodul (11) die Uplink-Ressourcenplanungs-Informationen, die den Stationsgeräten entsprechen, gemäß den Informationen über die Stationsgeräte, die mit der drahtlosen Zugangspunktvorrichtung (60) assoziiert sind, bestimmt, empfängt es ein Assoziierungs-Anfragepaket, das von jedem Stationsgerät gesendet wird, wobei das Assoziierungs-Anfragepaket Aussageinformationen eines häufigen kleinen Uplink-Paketgeräts trägt, und die Aussageinformationen eines häufigen kleinen Uplink-Paketgeräts zum Anzeigen verwendet werden, dass das Stationsgerät ein Gerät mit Uplink-Verkehr mit häufigen kleinen Paketen ist; und

das erste Verarbeitungsmodul (11) ferner für das Erfassen des Stationsgeräts als häufiges kleines Uplink-Paketgerät und für das Zuordnen des Identifikators zum Stationsgerät konfiguriert ist; und

das erste Sendemodul (12) ferner für das Senden eines Assoziierungs-Antwortpakets an das Stationsgerät konfiguriert ist, wobei das Assoziierungs-Antwortpaket den Identifikator trägt.

5. Stationsgerät (20), wobei das Stationsgerät (20) Folgendes umfasst:

a) ein zweites Empfangsmodul (21), das für das Empfangen von Uplink-Ressourcenplanungs-Informationen konfiguriert ist, die von einer drahtlosen Zugangspunktvorrichtung gesendet werden, wobei die Uplink-Ressourcenplanungs-Informationen einen Identifikator für jedes zu planende Stationsgerät, für jede zu planende Uplink-Ressource und Orte der zu planenden Uplink-Ressourcen umfassen, wobei der Identifikator zum Anzeigen verwendet wird, dass das Stationsgerät (20) ein Gerät mit Uplink-Verkehr mit häufigen kleinen Paketen ist, und der Uplink-Verkehr mit häufigen kleinen Paketen ein vordefinierter Dienst oder ein Dienst ist, bei dem eine Menge von kleinen Uplink-Paketen, die von der drahtlosen Zugangspunktvorrichtung pro Zeiteinheit empfangen werden, eine vorher festgelegte Schwelle überschreitet; und

b) ein zweites Verarbeitungsmodul, das für das Bestimmen einer Uplink-Ressource konfiguriert ist, die dem Stationsgerät (20) entspricht und zur Uplink-Übertragung verwendet wird, aus den Uplink-Ressourcenplanungs-Informationen, die vom zweiten Empfangsmodul (21) empfangen werden, gemäß einer Zuordnungsverbindung zwischen einem Identifikator und einer Uplink-Ressource;

c) das Stationsgerät (20), das zum Suchen einer Uplink-Übertragungsressource angepasst ist, die dem zu planenden Stationsgerät zugeordnet ist, gemäß den empfangenen Planungssignalen und einer Zuordnungsverbindung zwischen einem Identifikator und einer Uplink-Ressource zum Durchführen einer Uplink-Übertragung, **dadurch gekennzeichnet, dass**

d) Uplink-Übertragungsdaten im Dienst kleine Pakete mit weniger als 80 Byte sind;

e) das zweite Empfangsmodul (21) ferner folgendermaßen konfiguriert ist:

bevor das zweite Verarbeitungsmodul gemäß den Uplink-Ressourcenplanungs-Informationen die Uplink-Übertragung bestimmt, die dem Stationsgerät (20) entspricht und zur Uplink-Übertragung verwendet wird, empfängt es eine Übertragungswahrscheinlichkeit, die von der drahtlosen Zugangspunktvorrichtung gesendet wird, wobei die Übertragungswahrscheinlichkeit durch die drahtlose Zugangspunktvorrichtung gemäß Lastinformationen und QoS-Bestimmungen der Stationsgeräte, die mit der drahtlosen Zugangspunktvorrichtung assoziiert sind, bestimmt wird.

6. Stationsgerät (20) nach Anspruch 5, wobei das zweite Empfangsmodul (21) speziell für Folgendes konfiguriert ist:

zum Empfangen von Uplink-Ressourcenplanungs-Informationen, die von der drahtlosen Zugangspunktvorrichtung mithilfe eines Übertragungssignals oder Kontrollsignalen in einem Kontrollkanal gesendet werden.

7. Stationsgerät (70) nach einem der Ansprüche 5 bis 6, wobei das Stationsgerät (70) ferner Folgendes umfasst:

ein zweites Sendemodul (71), folgendermaßen konfiguriert: bevor das zweite Empfangsmodul (71) die Uplink-Ressourcenplanungs-Informationen empfängt, die von der drahtlosen Zugangspunktvorrichtung gesendet werden, sendet es ein zugehöriges Anfragepaket an die drahtlose Zugangspunktvorrichtung, wobei das zugehörige Anfragepaket Aussageinformationen eines häufigen kleinen Uplink-Paketgeräts trägt, und die Aussageinformationen eines häufigen kleinen Uplink-Paketgeräts zum Anzeigen verwendet werden, dass das Stationsgerät (70) ein Gerät mit Uplink-Verkehr mit häufigen kleinen Paketen ist; und wobei

das zweite Empfangsmodul (21) ferner für das Empfangen eines zugehörigen Antwortpakets konfiguriert ist, das von der drahtlosen Zugangspunktvorrichtung gesendet wird, wobei das zugehörige Antwortpaket den Identifikator trägt.

8. Ressourcenplanungsverfahren, wobei das Ressourcenplanungsverfahren Folgendes umfasst:

a) Bestimmen (S101) von Uplink-Ressourcenplanungs-Informationen durch eine drahtlose Zugangspunktvorrichtung gemäß Informationen über Stationsgeräte, die mit der drahtlosen Zugangspunktvorrichtung assoziiert sind, wobei die Uplink-Ressourcenplanungs-Informationen einen Identifikator für jedes zu planende Stationsgerät, für jede zu planende Uplink-Ressource und Orte der zu planenden Uplink-Ressourcen umfassen, wobei die zu planenden Stationsgeräte mehrere Geräte der Stationsgeräte aufweisen, der Identifikator zum Anzeigen verwendet wird, dass das Stationsgerät ein Gerät mit Uplink-Verkehr mit häufigen kleinen Paketen ist, und der Uplink-Verkehr mit häufigen kleinen Paketen ein vordefinierter Dienst oder ein Dienst ist, bei dem eine Menge von kleinen Uplink-Paketen, die von der drahtlosen Zugangspunktvorrichtung pro Zeiteinheit empfangen werden, eine vorher festgelegte Schwelle überschreitet; und

b) Senden (S102) von Uplink-Ressourcenplanungs-Informationen von der drahtlosen Zugangspunktvorrichtung an die zu planenden Stationsgeräte;

c) Planen der Uplink-Übertragungsressourcen für mehrere Stationsgeräte zu einem Zeitpunkt gemäß den Identifikatoren der Stationsgeräte; und

d) Liefern von Informationen über die Ressourcen an die zu planenden Stationsgeräte, **dadurch gekennzeichnet, dass**

e) Uplink-Übertragungsdaten im Dienst kleine Pakete mit weniger als 80 Byte sind; und

e1) das Bestimmen (S101) von Uplink-Ressourcenplanungs-Informationen durch eine drahtlose Zugangspunktvorrichtung gemäß den Informationen über Stationsgeräte, die mit der drahtlosen Zugangspunktvorrichtung assoziiert sind, Folgendes umfasst:

e2) Sammeln von Statistiken durch die drahtlose Zugangspunktvorrichtung über Kanalinformationen und Lastinformationen der Stationsgeräte, die mit der drahtlosen Zugangspunktvorrichtung assoziiert sind;

e3) Bestimmen eines MCS (Modulation and Coding Scheme = Modulations- und Codierungschema) durch die drahtlose Zugangspunktvorrichtung gemäß den Kanalinformationen, das von der drahtlosen Zugangspunktvorrichtung unterstützt wird;

e4) Erwerben von Informationen über die durchschnittliche Last der Stationsgeräte von der drahtlosen Zugangspunktvorrichtung gemäß den Lastinformationen; und

e4) Bestimmen einer Größe einer Uplink-Ressource, die für jedes Stationsgerät erforderlich ist, von der drahtlosen Zugangspunktvorrichtung gemäß dem MCS und den Informationen über die durchschnittliche Last; und wobei

e5) das Senden von Uplink-Ressourcenplanungs-Informationen von der drahtlosen Zugangspunktvorrichtung an die zu planenden Stationsgeräte Folgendes umfasst:

e6) Planen von Uplink-Ressourcen für die Stationsgeräte von der drahtlosen Zugangspunktvorrichtung gemäß einer Summe von Uplink-Ressourcen, die für die Stationsgeräte erforderlich ist, wobei die Uplink-Ressourcen einige oder alle der zu planenden Uplink-Ressourcen umfassen; und

f) vor dem Senden (S102) von Uplink-Ressourcenplanungs-Informationen von der drahtlosen Zugangspunktvorrichtung an die zu planenden Stationsgeräte, ferner Folgendes umfassend:
Bestimmen einer Übertragungswahrscheinlichkeit für jedes zu planende Stationsgerät zum Senden von Uplink-Daten durch die drahtlose Zugangspunktvorrichtung gemäß den Lastinformationen und QoS-Bestimmungen der Stationsgeräte, die mit der drahtlosen Zugangspunktvorrichtung assoziiert sind.

9. Ressourcenplanungsverfahren, wobei das Ressourcenplanungsverfahren Folgendes umfasst:

a) Empfangen (S111) von Uplink-Ressourcenplanungs-Informationen durch ein Stationsgerät, die von einer drahtlosen Zugangspunktvorrichtung gesendet werden, wobei die Uplink-Ressourcenplanungs-Informationen einen Identifikator für jedes zu planende Stationsgerät, für jede zu planende Uplink-Ressource und Orte der zu planenden Uplink-Ressourcen umfassen, wobei der Identifikator zum Anzeigen verwendet wird, dass das Stationsgerät ein Gerät mit Uplink-Verkehr mit häufigen kleinen Paketen ist, und der Uplink-Verkehr mit häufigen kleinen Paketen ein vordefinierter Dienst oder ein Dienst ist, bei dem eine Menge von kleinen Uplink-Paketen, die von der drahtlosen Zugangspunktvorrichtung pro Zeiteinheit empfangen werden, eine vorher festgelegte Schwelle überschreitet; und

b) Bestimmen einer Uplink-Ressource, die dem Stationsgerät entspricht und zur Uplink-Übertragung verwendet wird, aus den Uplink-Ressourcenplanungs-Informationen durch das Stationsgerät gemäß einer Zuordnungsverbindung zwischen einem Identifikator und einer Uplink-Ressource;

c) Suchen einer Uplink-Übertragungsressource, die dem zu planenden Stationsgerät zugeordnet ist, gemäß den empfangenen Planungssignalen und einer Zuordnungsverbindung zwischen einem Identifikator und einer Uplink-Ressource zum Durchführen einer Uplink-Übertragung, **dadurch gekennzeichnet, dass**

d) Uplink-Übertragungsdaten im Dienst kleine Pakete mit weniger als 80 Byte sind; und

e1) vor dem Bestimmen (S112) einer Uplink-Ressource, die dem Stationsgerät entspricht und zur Uplink-Übertragung verwendet wird, gemäß einer Zuordnungsverbindung zwischen einem Identifikator und einer Uplink-Ressource, das Verfahren ferner Folgendes umfasst:

e2) Empfangen einer Übertragungswahrscheinlichkeit, die von der drahtlosen Zugangspunktvorrichtung gesendet wird, durch das Stationsgerät, wobei die Übertragungswahrscheinlichkeit durch die drahtlose Zugangspunktvorrichtung gemäß den Lastinformationen und QoS-Bestimmungen der Stationsgeräte, die mit der drahtlosen Zugangspunktvorrichtung assoziiert sind, bestimmt wird.

## Revendications

1. Dispositif de point d'accès sans fil (10), le dispositif de point d'accès sans fil (10) comprenant :

a) un premier module de traitement (11), configuré pour déterminer des informations de programmation de ressources de liaison montante en fonction d'informations sur des dispositifs de station associés au dispositif de point d'accès sans fil, dans lequel les informations de programmation de ressources de liaison montante comprennent un identificateur de chacun des dispositifs de station à programmer, des ressources de liaison montante à programmer et des emplacements des ressources de liaison montante à programmer, les dispositifs de station à programmer sont de multiples dispositifs des dispositifs de station, l'identificateur permet d'indiquer que le dispositif de station est un dispositif comportant un trafic de liaison montante avec de petits paquets fréquents et le trafic de liaison montante avec de petits paquets fréquents est un service prédéfini ou un service dans lequel une quantité de petits paquets de liaison montante reçus par le dispositif de point d'accès sans fil par unité de temps dépasse un seuil prédéfini ; et

b) un premier module d'envoi (12), configuré pour envoyer les informations de programmation de ressources de liaison montante déterminées par le premier module de traitement aux dispositifs de station à programmer ;

c) le dispositif de point d'accès sans fil (10) est adapté pour programmer les ressources de transmission de liaison montante pour de multiples dispositifs de station à la fois en fonction des identificateurs des dispositifs de station et fournir des informations sur les ressources aux dispositifs de station à programmer, **caractérisé par** ce qui suit ;

d) dans lequel les données de transmission de liaison montante dans le service sont de petits paquets de moins de 80 octets ; et

e1) dans lequel le premier module de traitement (11) est spécifiquement configuré pour : recueillir des statistiques sur les informations de canal et les informations de charge des dispositifs de station associés au dispositif de point d'accès sans fil (11) ;

e2) déterminer, en fonction des informations de canal, un schéma de modulation et de codage, MCS, pris en charge par le dispositif de point d'accès sans fil (10) ;

e3) acquérir des informations de charge moyenne des dispositifs de station en fonction des informations de charge ; et

e4) déterminer, en fonction du MCS et des informations de charge moyenne, la taille d'une ressource de liaison montante requise par chacun des dispositifs de station ; dans lequel

e5) le premier module d'envoi est spécifiquement configuré pour programmer les ressources de liaison montante pour les dispositifs de station en fonction d'une somme des ressources de liaison montante requises par les dispositifs de station, dans lequel les ressources de liaison montante sont en totalité ou en partie des ressources de liaison montante à programmer ; et

f) dans lequel le premier module de traitement (11) est en outre configuré pour : déterminer, en fonction des informations de charge et des exigences en matière de qualité de service (QoS) des dispositifs de station associés au dispositif de point d'accès sans fil (10), une probabilité de transmission pour chacun des dispositifs de station à programmer pour envoyer des données de liaison montante.

2. Dispositif de point d'accès sans fil (10) selon la revendication 1, dans lequel le premier module de traitement (11) est spécifiquement configuré pour :

acquérir une quantité M des dispositifs de station et une exigence de qualité de service (QoS) du trafic de liaison montante avec de petits paquets fréquents de chacun des dispositifs de station, dans lequel l'exigence de qualité de service comprend un seuil de probabilité de collision ; et

calculer, selon la formule suivante, la probabilité de transmission pour chacun des dispositifs de station à programmer pour envoyer les données de liaison montante :

$$(\alpha \times p)^{m} \leq \beta$$

dans lequel $\alpha$ représente un faible taux d'arrivée de paquets du dispositif de station,

$$\alpha = \frac{f_1}{f_2},$$ $f_1$ représente une fréquence

à laquelle le dispositif de station génère un petit paquet, et $f_2$ représente une fréquence à laquelle le dispositif de station transmet un petit paquet ; p représente la probabilité de transmission; $m \leq M$, et $m$ représente une quantité de dispositifs de station partageant un même élément de ressource ; et $\beta$ représente le seuil de probabilité de collision.

3. Dispositif de point d'accès sans fil (10) selon l'une quelconque des revendications 1 à 2, dans lequel le premier module d'envoi (12) est spécifiquement configuré pour :

envoyer les informations de programmation de ressources de liaison montante aux dispositifs de station à programmer à l'aide d'une balise de diffusion ou d'une signalisation de commande dans un canal de commande.

4. Dispositif de point d'accès sans fil (60) selon l'une quelconque des revendications 1 à 3, dans lequel le dispositif de point d'accès sans fil (60) comprend en outre :

un premier module de réception (61), configuré pour : avant que le premier module de traitement (11) ne détermine, en fonction des informations sur les dispositifs de station associés au dispositif de point d'accès sans fil (60), les informations de programmation de ressources de liaison montante correspondant aux dispositifs de station,

la réception d'un paquet de demande d'association envoyé par chacun des dispositifs de station, dans lequel le paquet de demande d'association porte des informations d'instruction d'un dispositif à petits paquets fréquents de liaison montante, et les informations d'instruction d'un dispositif à petits paquets fréquents de liaison montante permettent d'indiquer que le dispositif de station est un dispositif comportant un trafic de liaison montante avec de petits paquets fréquents ; et

le premier module de traitement (11) est en outre configuré pour enregistrer le dispositif de station comme dispositif à petits paquets fréquents de liaison montante, et attribuer l'identificateur au dispositif de station ; et

le premier module d'envoi (12) est en outre configuré pour envoyer un paquet de réponse d'association au dispositif de station, dans lequel le paquet de réponse d'association porte l'identificateur.

5. Dispositif de station (20), le dispositif de station (20) comprenant :

a) un second module de réception (21), configuré pour recevoir des informations de programmation de ressources de liaison montante envoyées par un dispositif de point d'accès sans fil, dans lequel les informations de programmation de ressources de liaison montante comprennent un identificateur de chacun des dispositifs de station à programmer, des ressources de liaison montante à programmer et des emplacements des ressources de liaison montante à programmer, l'identificateur permet d'indiquer que le dispositif de station (20) est un dispositif comportant un trafic de liaison montante avec de petits paquets fréquents, et le trafic de liaison montante avec de petits paquets fréquents est un service prédéfini ou un service dans lequel une quantité de petits paquets de liaison montante reçus par le dispositif de point d'accès sans fil par unité de temps dépasse un seuil prédéfini ; et

b) un second module de traitement, configuré pour déterminer, en fonction d'une relation de mappage entre un identificateur et une ressource de liaison montante, une ressource de liaison montante qui correspond au dispositif de station (20) et qui est utilisée pour la transmission de liaison montante, à partir des informations de programmation de ressources de liaison montante reçues par le second module de réception (21),

c) le dispositif de station (20) est adapté, en fonction de la signalisation de programmation reçue et d'une relation de mappage entre un identificateur et une ressource de liaison montante, d'une ressource de transmission de liaison montante attribuée au dispositif de station à programmer, pour effectuer une transmission de liaison montante,

**caractérisé par** ce qui suit :

d) dans lequel les données de transmission de liaison montante dans le service sont de petits paquets de moins de 80 octets.

e) dans lequel le module de réception (21) est en outre configuré pour :

avant que le second module de traitement ne détermine, en fonction des informations de programmation de ressources de liaison montante, la ressource de liaison montante qui correspond au dispositif de station (20) et qui est utilisée pour la transmission de liaison montante, recevoir une probabilité de transmission envoyée par le dispositif de point d'accès sans fil, la probabilité de transmission étant déterminée par le dispositif de point d'accès sans fil selon les informations de charge et les exigences de QoS des dispositifs de station associés au dispositif de point d'accès sans fil.

6. Dispositif de station (20) selon la revendication 5, dans lequel le second module de réception (21) est spécifiquement configuré pour :

recevoir les informations de programmation des ressources de liaison montante envoyées par le dispositif de point d'accès sans fil à l'aide d'une balise de diffusion ou d'une signalisation de commande dans un canal de commande.

7. Dispositif de station (70) selon l'une quelconque des revendications 5 à 6, le dispositif de station (70) comprenant en outre :

un second module d'envoi (71), configuré pour : avant que le second module de réception (71) ne reçoive les informations de programmation de ressources de liaison montante envoyées par le dispositif de point d'accès sans fil, envoyer un paquet de demande d'association au dispositif de point d'accès sans fil, dans lequel le paquet de demande d'association porte les informations d'instruction d'un dispositif de petits paquets fréquents de liaison montante, et les informations d'instruction d'un dispositif à petits paquets fréquents de liaison montante permettent d'indiquer que le dispositif de station (70) est un dispositif comportant un trafic de liaison montante avec de petits paquets fréquents ; et le second module de réception (21) est en outre configuré pour recevoir un paquet de réponse d'association envoyé par le dispositif de point d'accès sans fil, dans lequel le paquet de réponse d'association porte l'identificateur.

8. Procédé de programmation de ressources, le procédé de programmation de ressources comprenant :

a) la détermination (S101), par un dispositif de point d'accès sans fil, d'informations de programmation de ressources de liaison montante en fonction des informations sur des dispositifs de station associés au dispositif de point d'accès sans fil dans lequel les informations de programmation de ressources de liaison montante comprennent un identificateur de chacun des dispositifs de station à programmer, des ressources de liaison montante à programmer et des emplacements de ressources de liaison montante à programmer, les dispositifs de station à programmer sont de multiples dispositifs des dispositifs de station, l'identificateur permet d'indiquer que le dispositif de station est un dispositif comportant un trafic de liaison montante avec de petits paquets fréquents et le trafic de liaison montante avec de petits paquets fréquents est un service prédéfini ou un service dans lequel une quantité de petits paquets de liaison montante reçus par le dispositif de point d'accès sans fil par unité de temps dépasse un seuil prédéfini ; et

b) l'envoi (S102), par le dispositif de point d'accès sans fil, d'informations de programmation de ressources de liaison montante vers les dispositifs de station à programmer

c) la programmation de ressources de transmission de liaison montante pour de multiples dispositifs de station à la fois en fonction des identificateurs des dispositifs de station, et

d) la fourniture d'informations sur les ressources à des dispositifs de station à programmer, **caractérisé par** ce qui suit :

e) dans lequel les données de transmission de liaison montante dans le service sont de petits paquets de moins de 80 octets ; et

e1) dans lequel la détermination (S101), par un dispositif de point d'accès sans fil, d'informations de programmation de ressources de liaison montante en fonction des informations sur les dispositifs de station associés au dispositif de point d'accès sans fil comprend :

e2) le recueil, par le dispositif de point d'accès sans fil, de statistiques sur les informations de canal et les informations de charge des dispositifs de station associés au dispositif de point d'accès sans fil ;

e3) la détermination, par le dispositif de point d'accès sans fil en fonction des informations de canal, d'un schéma de modulation et de codage MCS pris en charge par le dispositif de point d'accès sans fil ;

e4) l'acquisition, par le dispositif de point d'accès sans fil, d'informations de charge moyenne des dispositifs de station en fonction des informations de charge ; et

la détermination, par le dispositif de point d'accès sans fil en fonction du MCS et des informations sur la charge moyenne, de la taille d'une ressource de liaison montante requise par chacun des dispositifs de station ; et

e5) l'envoi, par le dispositif de point d'accès sans fil, d'informations de programmation de ressources de liaison montante aux dispositifs de station à programmer comprend :

e6) la programmation, par le dispositif de point d'accès sans fil, de ressources de liaison montante pour les dispositifs de station en fonction d'une somme de ressources de liaison montante requises par les dispositifs de station, dans lequel les ressources de liaison montante

représentent une partie ou la totalité des ressources de liaison montante à programmer ; et

f) avant l'envoi (S102), par le dispositif de point d'accès sans fil, d'informations de programmation de ressources de liaison montante vers les dispositifs de station à programmer, comprenant en outre :

la détermination, par le dispositif de point d'accès sans fil en fonction des informations de charge et des exigences de QoS des dispositifs de station associés au dispositif de point d'accès sans fil, d'une probabilité de transmission pour chacun des dispositifs de station à programmer pour envoyer des données de liaison montante.

9. Procédé de programmation de ressources, le procédé de programmation de ressources comprenant :

a) la réception (S111), par un dispositif de station, d'informations de programmation de ressources de liaison montante envoyées par un dispositif de point d'accès sans fil, dans lequel les informations de programmation de ressources de liaison montante comprennent un identificateur de chacun des dispositifs de station à programmer, des ressources de liaison montante à programmer et des emplacements des ressources de liaison montante à programmer, l'identificateur permet d'indiquer que le dispositif de station est un dispositif comportant un trafic de liaison montante avec de petits paquets fréquents et le trafic de liaison montante avec de petits paquets fréquents est un service prédéfini ou un service dans lequel une quantité de petits paquets de liaison montante reçus par le dispositif de point d'accès sans fil par unité de temps dépasse un seuil prédéfini ; et

b) la détermination, par le dispositif de station en fonction d'une relation de mappage entre un identificateur et une ressource de liaison montante, d'une ressource de liaison montante qui correspond au dispositif de station et qui est utilisée pour la transmission de liaison montante, à partir des informations de programmation de ressources de liaison montante

c) l'identification d'une ressource de transmission de liaison montante attribuée au dispositif de station à programmer, en fonction de la signalisation de programmation reçue et d'une relation de mappage entre un identificateur et une ressource de liaison montante, pour effectuer une transmission de liaison montante, **caractérisé par** ce qui suit :

d) dans lequel les données de transmission de liaison montante dans le service sont de petits paquets de moins de 80 octets ; et

e1) dans lequel, avant la détermination (S112), par le dispositif de station en fonction d'une relation de mappage entre un identificateur et une ressource de liaison montante, d'une ressource de liaison montante qui correspond au dispositif de station et qui est utilisée pour la transmission de liaison montante, le procédé comprend en outre :

e2) la réception, par le dispositif de station, d'une probabilité de transmission envoyée par le dispositif de point d'accès sans fil, dans lequel la probabilité de transmission est déterminée par le dispositif de point d'accès sans fil en fonction des informations de charge et des exigences de qualité de service des dispositifs de station associés au dispositif de point d'accès sans fil.

FIG. 1

FIG. 2

FIG. 3

**FIG. 4**

**FIG. 5**

**FIG. 6**

**FIG. 7**

An AP device determines uplink resource scheduling information according to information about station devices associated with the AP device, where the uplink resource scheduling information includes an identifier of each of to-be-scheduled station devices, to-be-scheduled uplink resources, and locations of the to-be-scheduled uplink resources, the to-be-scheduled station devices are one or more devices in the station devices, the identifier is used to indicate that the station device is a device having uplink traffic with frequent small packets, and the uplink traffic with frequent small packets is a predefined service or a service in which a quantity of uplink small packets received by the AP device per unit of time exceeds a preset threshold

S101

The AP device sends the uplink resource scheduling information to the to-be-scheduled station devices

S102

## FIG. 8

A station device receives uplink resource scheduling information sent by a wireless access point device, where the uplink resource scheduling information includes an identifier of each of to-be-scheduled station devices, to-be-scheduled uplink resources, and locations of the to-be-scheduled uplink resources, the identifier is used to indicate that the station device is a device having uplink traffic with frequent small packets, and the uplink traffic with frequent small packets is a predefined service or a service in which a quantity of uplink small packets received by the wireless access point device per unit of time exceeds a preset threshold

S111

The station device determines, according to a mapping relationship between an identifier and an uplink resource, an uplink resource that corresponds to the station device and that is used for uplink transmission, from the uplink resource scheduling information

S112

## FIG. 9

**REFERENCES CITED IN THE DESCRIPTION**

**Patent documents cited in the description**

- US 2012155406 A1

- EP 3099091 A1